# FASCICULE DE BREVET EUROPEEN

(11) **EP 1 492 742 B1**
(45) Date de publication et mention de la délivrance du brevet: **20.07.2005**
(21) Numéro de dépôt: 03745816.3
(22) Date de dépôt: 03.04.2003
(51) Int. Cl.: C04B 35/66, C04B 38/00, C04B 14/30, C01F 7/02

(54) **MATERIAU REFRACTAIRE A BASE D ALUMINE POLYCRISTALLINE**
FEUERFESTMATERIAL AUF BASIS VON POLYKRISTALLINEM ALUMINIUMOXID
REFRACTORY MATERIAL BASED ON POLYCRYSTALLINE ALUMINA

(30) Priorité: 08.04.2002 FR 0204356
(43) Date de publication de la demande: 05.01.2005
(73) Titulaire: PEM ABRASIFS-REFRACTAIRES, 13120 Biver (FR)
(72) Inventeur: BOURLIER, Florent, F-92130 Issy les Moulineaux (FR); ROQUEFEUIL, Frédéric, F-75013 Paris (FR)
(74) Mandataire: Fénot, Dominique
(86) Numéro de dépôt international: PCT/FR2003/001048
(87) Numéro de publication internationale: WO 2003/084896

## Description

### Domaine technique de l'invention

L'invention concerne les réfractaires à base d'alumine destinés notamment aux garnissages de fours les plus divers, ainsi qu'au garnissage des poches de coulée aptes à recevoir des matériaux en fusion.

### Etat de la technique

L'utilisation de réfractaires à base d'alumine est très répandue, par exemple sous la forme de corindon blanc électrofondu, ou sous la forme d'alumine calcinée à haute température au four tournant. La préparation d'une alumine apte à une application réfractaire n'en demeure pas moins une opération délicate. La matière première est en effet constituée essentiellement par les bauxites, hydrates d'alumine naturels dont on extrait l'alumine par attaque alcaline pour former un aluminate de soude, à partir duquel on fait précipiter ultérieurement l'hydrate d'alumine, qui donne ensuite l'alumine par calcination.

Or la calcination de l'hydroxyde d'aluminium est connue pour s'effectuer à travers une suite de transformations complexes, qui se succèdent jusqu'à des températures élevées. Ainsi, pour obtenir un matériau stable, il convient de calciner le produit à très haute température. C'est le choix qui est fait dans le cas de l'alumine dite tabulaire.

Puisqu'on doit monter très haut en température, on peut préférer aller jusqu'à la fusion ; on prépare alors le corindon électrofondu dont l'emploi comme matériau réfractaire est également bien connu.

Dans les deux cas l'alumine doit être amenée à une granulométrie convenable. Dans le cas de l'alumine tabulaire, le matériau est bouleté avant calcination, alors que, dans le cas du corindon électrofondu, le matériau est concassé et criblé.

Des tentatives de mise en forme directe ont déjà été faites par le passé. On peut citer en particulier le brevet US 1.871.793 d'Alcoa de 1932, qui décrit l'atomisation de l'alumine électrofondue pour la transformer en sphères creuses de diamètre inférieur à 5 mm et d'épaisseur de paroi inférieure à 250 µm. Le produit obtenu est une alumine métallurgique destiné à servir de matière première à la fabrication de l'aluminium ; son utilisation comme réfractaire n'est pas envisagée. Il est probable, en effet, que ce matériau constitué de billes ressemblant à de mini balles de ping-pong doit avoir une résistance mécanique assez faible.

Par ailleurs, on fabrique de façon courante du corindon électrofondu atomisé pour obtenir un matériau qui se présente sous la forme de billes pleines, qui sont ensuite utilisées pour la fabrication d'abrasifs.

### Objet de l'invention

Le but de la présente invention est de fournir un matériau réfractaire à base d'alumine, présentant une bonne stabilité thermique et une bonne résistance à l'écrasement, utilisable notamment sous forme de béton réfractaire à projeter.

L'invention a pour objet un matériau réfractaire à base de corindon électrofondu constitué de billes de diamètre compris entre 50 µm et 5 mm, présentant un taux de porosité totale compris entre 10 et 50% du volume des billes, la porosité fermée représentant de 80 à 98 % de la porosité totale.

### Description l'invention

Lors de la fabrication de billes de corindon électrofondu atomisé pour abrasifs, la demanderesse a constaté, à l'occasion d'incidents de fabrication, qu'il était possible d'obtenir des produits intermédiaires entre billes pleines et billes creuses. Le matériau se présente bien sous la forme de billes, mais la structure de ces billes est celle d'une éponge plus ou moins dense ; alors que la bille creuse comporte une seule macroporosité de forme sphérique et bien centrée dans la bille, le matériau obtenu présente de nombreuses macroporosités de forme quelconque, réparties de façon à peu près homogène. Au terme de multiples essais destinés à réduire la porosité ouverte de ces billes, le demanderesse est parvenue à définir des conditions opératoires permettant d'obtenir des billes dans lesquelles peu de porosités débouchent en surface.

Le matériau selon l'invention présente par rapport à la bille creuse une résistance à l'écrasement plus importante, alors que sa conductivité thermique reste faible du fait de la présence de porosités.

Il se présente sous la forme de billes pratiquement sphériques de diamètre extérieur compris entre 50 µm et 5 mm, et de préférence entre 0,5 mm et 2 mm. Ces billes présentent une porosité majoritairement fermée, comprise entre 10 et 50% du volume total des billes, et de préférence entre 20 et 30%. La porosité ouverte, correspondant aux pores débouchant à la surface de la bille, mesurée par picnométrie à l'eau sous pression atmosphérique, se situe entre 2 et 20%.

La matière de ces billes est constituée d'alumine polycristalline formée de cristallites de taille inférieure à 50 µm. Cette structure s'avère remarquablement stable jusque vers 1500°C. On peut le vérifier en examinant le matériau au microscope électronique après recuit à 1500°C, et cet examen montre qu'aucun changement ne vient modifier la structure du produit.

La résistance à l'écrasement des billes selon l'invention se situe typiquement entre 150 et 300 g, contre 30 à 40g pour les billes creuses de l'art antérieur, avec une conductivité thermique du matériau en vrac dans le domaine de température 200°C - 1200°C de 0,5 à 0,8 Wm⁻¹°K⁻¹, contre 0,4 à 0,6 Wm⁻¹°K⁻¹ pour les billes creuses de l'art antérieur.

Ce matériau permet en particulier la préparation de bétons à projeter faciles d'emploi, propriété tenant à la forme sphérique des particules dont il est constitué.

Le procédé de fabrication des produits selon l'invention consiste à couler le corindon blanc ou brun fondu en jet bâton, sur une lame d'air horizontale chargée d'eau pulvérisée, ce qui conduit à l'atomisation du produit. Les paramètres les plus appropriés pour obtenir les produits selon l'invention sont les suivants :
- pression d'air sur la lame : 0,05 à 0,1 MPa.
- largeur de la lame : 2 mm par kg de corindon liquide à traiter en une minute.
- épaisseur de la lame : quelques millimètres.
- rapport entre débit d'eau et débit de corindon fondu : 0,2 à 1,5 litre d'eau par kg de corindon fondu.

### Exemples

### Exemple 1

On a fondu dans un four à arc de 2 MW de l'alumine Bayer en quantité suffisante pour disposer d'une réserve de corindon blanc électrofondu de 2 tonnes environ. Cette réserve a permis la coulée continue d'un jet régulier de corindon liquide pendant 10 minutes, à la vitesse de 100 kg par minute, directement sur une lame mixte d'air et d'eau.

Cette lame était générée par un orifice de section rectangulaire de largeur 240 mm et de hauteur 6 mm, positionné dans un plan vertical, et alimenté par une source d'air maintenant en régime permanent une pression de 0,09 MPa sur l'orifice. Le courant d'air recevait une injection de 22 kg d'eau par minute.

Le corindon ainsi coulé, a été récupéré dans une fosse en aval de l'installation et sa granulométrie était la suivante :
- fraction < 0,5 nim : 15%
- fraction > 2 mm : 20%
- fraction > 5 mm : 3%

Le taux de porosité du produit était de 28 %, dont 1,3% de porosité ouverte.

La résistance des billes à l'écrasement était de 260 g.

### Exemple 2

On a préparé un béton réfractaire à partir d'un mélange de produits secs de composition suivante en poids :
- corindon brun de granulométrie comprise entre 2 et 5 mm : 23%
- corindon brun de granulométrie comprise entre 0,2 et 2 mm : 37%
- corindon brun de granulométrie < 0,2 mm : 24%
- microsilice amorphe en billes de taille inférieures à 20 µm : 5%
- alumine P622B à basse teneur en soude d'Aluminium Pechiney : 6%
- ciment Secar 80 à forte teneur en alumine de Lafarge Aluminates : 5%

Pour le gâchage et la mise en place, on a ajouté au mélange les produits suivants :
- métaphosphate de sodium : 0,2%
- polyméthacrylate d'ammonium Darvan C ® de la société Polyplastic : 0,3%
- eau : 6%

Après séchage et cuisson, on a obtenu un béton réfractaire de masse volumique 3,0 kg/dm³.

Sa conductivité thermique mesurée à 600°C était de 5,5 W°m⁻¹C⁻¹, et sa résistance à l'écrasement a été estimée à 110 MPa.

### Exemple 3

On a préparé un béton réfractaire à partir d'un mélange de produits secs de composition suivante en poids :
- billes selon l'invention de taille comprise entre 2 et 5 mm : 15,4%
- billes selon l'invention de taille comprise entre 0,2 et 2 mm : 37%
- corindon brun de taille < 0,2 mm : 30%
- microsilice amorphe en billes de taille < 20 µm : 5,5%
- alumine P622B : 6,6%
- ciment Secar 80 : 5,5%

Pour le gâchage et la mise en place, on a ajouté les produits suivants :
- métaphosphate de sodium : 0,2%
- Darvan C ® : 0,3%
- eau : 8%

Après séchage et cuisson, on a obtenu un béton réfractaire de masse volumique 2,5 kg/dm³.

Sa conductivité thermique mesurée à 600°C était de 2,7 W°m⁻¹C⁻¹, et sa résistance à l'écrasement était supérieure à 100 MPa. Mis en place sur les parois d'un four travaillant à 1450°C, ce garnissage s'est avéré parfaitement stable.

## Revendications

1. Matériau réfractaire à base de corindon électrofondu **caractérisé en ce qu'**il est constitué de billes de diamètre compris entre 50 µm et 5 mm, présentant un taux de porosité totale compris entre 10 et 50% du volume des billes, la porosité fermée représentant de 80 à 98 % de la porosité totale.

2. Matériau réfractaire selon la revendication 1, **caractérisé en ce que** la porosité totale est comprise entre 20 et 30 % du volume des billes.

3. Matériau réfractaire selon l'une des revendications 1 ou 2, **caractérisé en ce qu'**il est constitué d'alumine polycristalline en cristallites de taille intérieure à 50 µm.

4. Matériau réfractaire selon l'une des revendications 1 à 3, **caractérisé en ce que** la résistance à l'écrasement des billes dont il est constitué se situe entre 150 et 300 g.

5. Matériau réfractaire selon l'une des revendications 1 à 4, **caractérisé en ce que** la conductivité thermique du matériau en vrac est comprise entre 0,5 et 0,8 Wm⁻¹°K⁻¹.

6. Matériau réfractaire selon l'une des revendications 1 à 5, **caractérisé en ce qu'**il ne donne lieu à aucune transformation cristalline jusqu'à 1500°C.

7. Matériau réfractaire selon l'une des revendications 1 à 6, **caractérisé en ce que** le diamètre moyen des billes est compris entre 0,5 et 2 mm.

8. Utilisation de matériaux selon l'une des revendications 1 à 7 pour la fabrication de bétons réfractaires.

9. Utilisation selon la revendication 8, **caractérisée en ce que** le béton réfractaire est mis en place par projection.

## Patentansprüche

1. Feuerfestmaterial auf Basis von elektrisch geschmolzenem Korund, **dadurch gekennzeichnet, dass** es aus Kugeln von 50 µm bis 5 mm Durchmesser mit einem Anteil der Gesamtporosität am Volumen der Kugeln von 10 bis 50 % besteht, wobei die geschlossene Porosität 80 bis 98 % der Gesamtporosität darstellt.

2. Feuerfestmaterial nach Anspruch 1, **dadurch gekennzeichnet, dass** die Gesamtporosität 20 bis 30 % des Volumens der Kugeln beträgt.

3. Feuerfestmaterial nach einem der Ansprüche 1 oder 2, **dadurch gekennzeichnet, dass** es aus polykristallinem Aluminiumoxid aus Kristalliten mit einer Größe von weniger als 50 µm besteht.

4. Feuerfestmaterial nach einem der Ansprüche 1 bis 3, **dadurch gekennzeichnet, dass** die Druckfestigkeit der Kugeln, aus denen es besteht, zwischen 150 und 300 g liegt.

5. Feuerfestmaterial nach einem der Ansprüche 1 bis 4, **dadurch gekennzeichnet, dass** die Wärmeleitfähigkeit des losen Materials 0,5 bis 0,8 Wm⁻¹°K⁻¹ beträgt.

6. Feuerfestmaterial nach einem der Ansprüche 1 bis 5, **dadurch gekennzeichnet, dass** es bis zu 1500°C keine kristalline Umwandlung bewirkt.

7. Feuerfestmaterial nach einem der Ansprüche 1 bis 6, **dadurch gekennzeichnet, dass** der mittlere Durchmesser der Kugeln 0,5 bis 2 mm beträgt.

8. Verwendung des Materials nach einem der Ansprüche 1 bis 7 für die Herstellung von Feuerfestbetonen.

9. Verwendung nach Anspruch 8, **dadurch gekennzeichnet, dass** der Feuerfestbeton durch Spritzen verarbeitet wird.

## Claims

1. Refractory material based on electrically melted corundum **characterised in that** it is composed of balls with a diameter of between 50 µm and 5 mm, with a total void ratio between about 10 and 50% of the volume of the balls, with closed pores accounting for between 80 and 98% of the pore volume.

2. Refractory material according to claim 1, **characterised in that** the total pore volume is between 20 and 30% of the volume of the balls.

3. Refractory material according to any one of claims 1 or 2, **characterised in that** it is composed of polycrystalline alumina formed from crystallites smaller than 50 µm.

4. Refractory material according to any one of claims 1 to 3, **characterised in that** the compressive strength of the balls from which it is made is between 150 and 300 g.

5. Refractory material according to any one of claims 1 to 4, **characterised in that** the thermal conductivity of the bulk material is between 0.5 to 0.8 Wm⁻¹°K⁻¹.

6. Refractory material according to any one of claims 1 to 5, **characterised in that** there is no crystalline transformation up to 1500°C.

7. Refractory material according to any one of claims 1 to 6, **characterised in that** the average diameter of the balls is between 0.5 and 2 mm.

8. Use of materials according to any one of claims 1 to 7 for manufacturing of refractory concrete.

9. Use according to claim 8, **characterised in that** the refractory concrete is placed by spraying.
